# EUROPEAN PATENT APPLICATION

(11) **EP 2 889 841 A1**
(43) Date of publication of application: **01.07.2015**
(21) Application number: 13461572.3
(22) Date of filing: 31.12.2013
(51) Int. Cl.: G06T 7/20

(54) **A method for hiding redundant information in a video image**

(71) Applicant: Patents Factory Ltd. Sp. z o.o., 65-043 Zielona Gora (PL)
(72) Inventor: Paczkowski, Jacek, 65-043 Zielona Gora (PL)
(74) Representative: Pawlowski, Adam

(57) **Abstract**

A method for modifying a video image, comprising the steps of: reading a source video image comprising source frames; comparing the source video frame with at least one past frame to indicate at least one area with a moving object; decreasing amount of information in an area of the source video frame outside the area with the moving object to generate a modified frame.

## Description

The present invention relates to improvements in displaying video image, applicable in particular to video surveillance systems.

In a typical surveillance system, the system operator observes video images from a plurality of video cameras, to detect possible threats to the area under surveillance. Some threats can be detected by analyzing moving objects, such as persons, animals or vehicles. However, precise observation of movement of objects requires a lot of attention and can be tiresome for the operator in case of small objects or a plurality of objects on a plurality of video images. Furthermore, in some environments with a non-uniform background, such as a forest or an inside of a warehouse or a shop, the movement of objects may be hard to detect.

A US patent US4168510 presents that in television apparatus for producing signals for displaying simultaneously a succession of separated images of an object moving over a selectable time period in an otherwise static scene, the viewability of the display is improved by enhancing the contrast, either continuously or intermittently, between the images of the moving object and the background. This is accomplished by altering the amplitude of signals representing the images of the moving objects relative to the amplitude of signals representing the background.

It would be advantageous to provide an improved system and method for displaying a video signal, to facilitate detection of moving objects for the operator of a video surveillance system.

The object of the invention is a method for modifying a video image, comprising the steps of: reading a source video image comprising source frames; comparing the source video frame with at least one past frame to indicate at least one area with a moving object; decreasing amount of information in an area of the source video frame outside the area with the moving object to generate a modified frame.

Preferably, the step of comparing the source video frame with at least one past frame comprises generating a moving object mask, the moving object mask comprising the contents of the frame that correspond to the objects which changed their position.

Preferably, the step of decreasing amount of information comprises decreasing amount of information in the whole source frame and combining the obtained frame with the moving object mask.

Preferably, the step of decreasing amount of information comprises modifying the brightness, contrast, hue and/or saturation of the source frame.

Preferably, the step of decreasing amount of information comprises lowering the resolution of the image.

Preferably, the step of decreasing amount of information comprises blurring the image.

Preferably, the step of decreasing amount of information comprises decreasing the color depth of the image.

Preferably, the step of decreasing amount of information comprises replacing the pixels with a predetermined pixel.

Preferably, the steps of comparing the source video frame with at least one past frame and decreasing amount of information involve calculating an average of a plurality of source frames and subtracting the average from a source frame to obtain a modified frame.

Preferably, the method further comprises dividing the values of pixels of the modified frame by 2 and adding a half of the value of the color range to the result.

The object of the invention is a computer program comprising program code means for performing all the steps of the above-discussed method when said program is run on a computer, as well as a computer readable medium storing computer-executable instructions performing all the steps of the above-described method when executed on a computer.

Another object of the invention is a system for modifying a video image, comprising: a video image source, the source video image comprising source frames; means for comparing the source video frame with at least one past frame to indicate at least one area with a moving object; means for decreasing amount of information in an area of the source video frame outside the area with the moving object to generate a modified frame.

Preferably, the system comprises a moving object mask generator configured to generate a moving object mask comprising the contents of the frame that correspond to the objects which changed their position, an image content reduction block configured to decrease amount of information in a source video frame, an image multiplexer configured to combine the degraded image output from the image content reduction block with the moving object mask output from the moving object mask generator.

Preferably, the system comprises a series of at least three buffers arranged as a shift register and configured to store consecutive recent frames of the source video signal; an average value calculator configured to calculate an average value of pixels of frames stored in the buffers; a deviation calculator configured to generate a modified image as a function of values of pixels of an image stored in one of the buffers and the average values calculated by the average value calculator.

The presented method and system allow the observer of the video image to quickly detect the motion of objects on the video image. Experiments have shown that the observers of a video image generated according to the presented method and system were clearly able to distinguish and recognize a higher number of moving objects as compared to a standard video image without having to pay much attention to analyzing the video signal. In contrast, when the operators watched the original source video signals, they got tired more quickly and were not able to recognize all moving objects, especially small objects distanced from the camera.

The method and system are presented by means of example embodiment on a drawing, in which:
Fig. 1 shows a structure of a first embodiment of a system for generating a modified video image;
Fig. 2 shows a first embodiment of a method for generating a modified video image;
Fig. 3 shows a structure of a second embodiment of a system for generating a modified video image;
Fig. 4 shows a second embodiment of a method for generating a modified video image;
Fig. 5 shows an exemplary image generated according to the presented concepts.

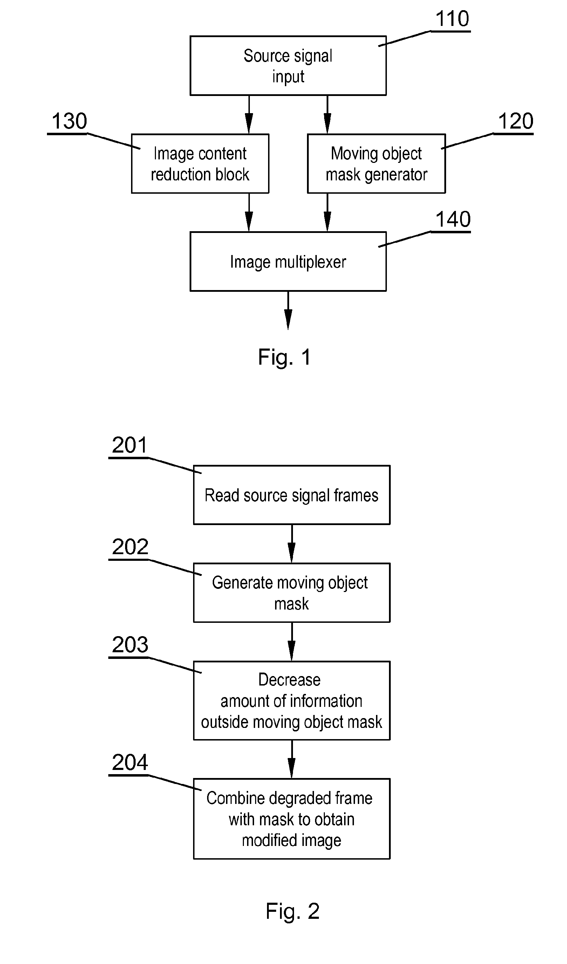

The structure of a first embodiment of a system for generating a modified video image is shown in Fig. 1. The system comprises a source video signal input 110, such as a video camera or a pre-recorded signal from a storage device. Consecutive frames of the source signal are input to a moving object mask generator 120 which compares each frame with at least one frame which is previous (past) in the video sequence and generates a mask indicating moving objects present in the particular frame. Therefore, the mask may comprise the contents of the frame that correspond to the objects which changed their position. The source frame is also processed by an image content reduction block 130, which is configured to decrease the amount of information contained in the source image. The source image with reduced content is multiplexed with the moving objects mask in a signal multiplexer 140. As a result, a modified image is obtained wherein the moving objects are visible in greater detail than the rest of the image contents.

The amount of information contained in the image can be decreased in the content reduction block 130 by performing one of the following operations or a combination of two or more of the following operations:
- decreasing the contrast of the image,
- increasing or decreasing the brightness, contrast, hue or saturation of the image,
- lowering the resolution of the image,
- blurring the image,
- decreasing the color depth of the image, in particular converting the image to a single-color image, such as a grayscale image,
- converting the image to a uniform color area, such as grey.

The method of operation of the first embodiment of the system of Fig. 1 is shown in Fig. 2. A source signal frame is read in step 201. Next, in step 202 a moving object mask is generated for that frame. In step 203 the amount of information in the area of the image which is at least outside the moving object mask (or in the whole source frame) is decreased by performing one or more of the operations as described above. Then, the degraded image is combined with the moving object mask in step 204 to obtain a modified frame.

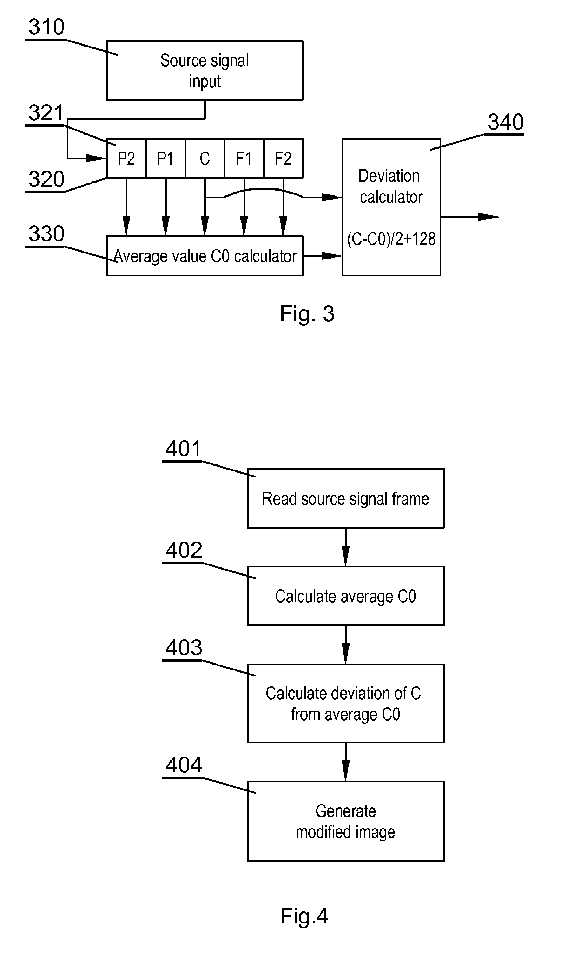

Fig. 3 shows a structure of a second embodiment of a system for generating a modified video image. The system comprises a source video signal input 310, such as a video camera or a pre-recorded signal from a storage device. Consecutive frames of the source signal are input to a series of at least three buffers 321 arranged as a shift register 320. Each buffer 321 is configured to store a single frame. In the presented embodiment, the shift register 320 stores a series of 5 last frames of the source video signal. An average value calculator 330 calculates an average value C0 of each pixel for all frames stored in the series of buffers 321. Next, for all pixels of the frame C of the middle buffer 321 a deviation from average is calculated in deviation calculator 340. The deviation for each pixel is calculated for example by subtracting the average value C0 for that pixel calculated by calculator 330 from the actual value of that pixel in frame C stored in the middle buffer 321, then the result is divided by 2 and a value of 128 is added to the result. The deviation calculator 340 outputs a modified frame, the pixels of which have values which emphasize the areas of the image which have changed within the series of frames. As a result, the pixels whose values are the same for all frames stored in buffers 321 have a value of 128. In contrast, the pixels whose values have changed throughout the frames have a value different than 128 in the output frame. As a result, the output frame comprises moving objects visible over a uniform background. The presented embodiment assumes 8-bit grayscale image. For color images, the operation can be performed for each R, G, B component independently, 8 bits for each color, therefore the grey background assumes values of R=128, G=128, B=128. For other color resolution images, the value that is added shall be preferably equal to half of the color range. The actual color of the moving object will be changed due to the above computations, but the essential advantage is that the moving object will have a contrasting color with respect to the neutral, uniform background and therefore will be easily visible. In the presented embodiment, the output frame is delayed by 2 frames with respect to the most recent source frame, so that the output image corresponds to the middle frame stored in buffer C which is compared with two past frames P1, P2 and two future frames F1, F2. A skilled person will appreciate that various modifications can be made to that method, such as calculating the modified frame on the basis of the most recent frame in the buffer. The presented embodiment is efficient in implementation and requires little processing resources to obtain the modified image.

Fig. 4 presents in general the steps of the method of the second embodiment. In step 201 source signal frame is read. An average C0 for a plurality of frames is calculated in step 202. In step 203 the source signal frame is compared with the average to calculate deviations from average. In step 204 a modified image is generated.

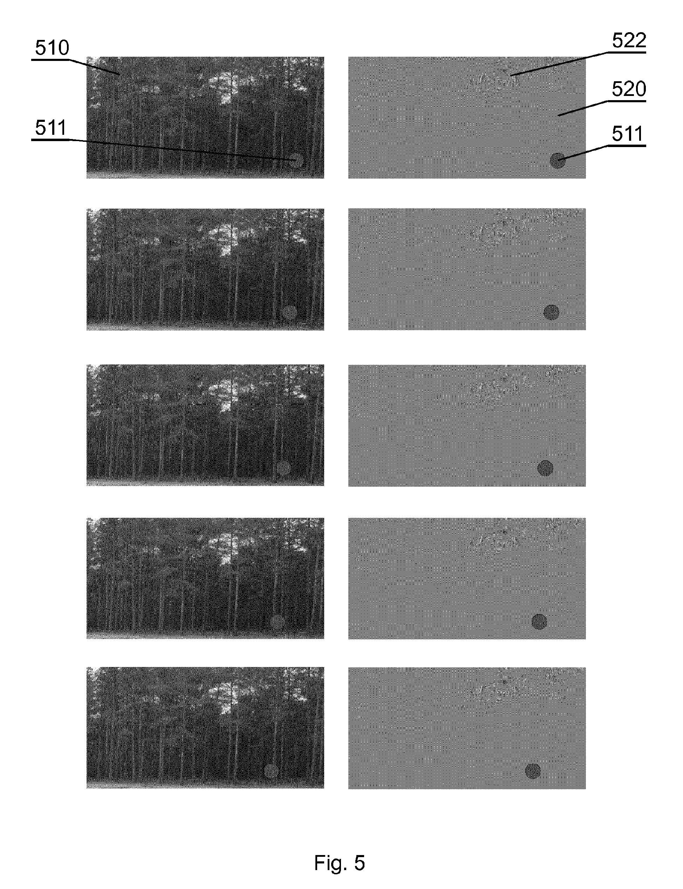

Fig. 5 presents an exemplary series of source images 510 with a moving object 511 and a series of modified images 520 generated in accordance with the second embodiment. Only the moving object 511 is visible on the modified images, as the other, stationary objects, are converted to a uniform background. In the presented example, wherein the background is a forest, some artifacts 522 may be visible at the background, due to small variations of the background (e.g. due to moving trees). Of course, in real implementation some blurring will occur in the modified images 520 at the path of the moving object, which is not shown in the drawing to make it more clear.

It can be easily recognized, by one skilled in the art, that the aforementioned method for modifying a video image may be performed and/or controlled by one or more computer programs. Such computer programs are typically executed by utilizing the computing resources of an encoder or decoder device. The computer programs can be stored in a non-volatile memory (or otherwise a non-transitory computer storage medium), for example a flash memory or in a volatile memory, for example RAM and are executed by a processing unit. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein. Accordingly, the scope of protection is not limited to the preferred embodiments described in the specification, but is only limited by the claims that follow.

In addition, any combination of the features of the appended claims is envisaged in the present application.

## Claims

**1.** A method for modifying a video image, comprising the steps of:
- reading a source video image comprising source frames;
- comparing the source video frame with at least one past frame to indicate at least one area with a moving object;
- decreasing amount of information in an area of the source video frame outside the area with the moving object to generate a modified frame.

**2.** The method according to claim 1, wherein the step of comparing the source video frame with at least one past frame comprises generating (202) a moving object mask, the moving object mask comprising the contents of the frame that correspond to the objects which changed their position.

**3.** The method according to claim 2, wherein the step of decreasing amount of information comprises decreasing amount of information (203) in the whole source frame and combining (204) the obtained frame with the moving object mask.

**2.** The method according to any of previous claims, wherein the step of decreasing amount of information comprises modifying the brightness, contrast, hue and/or saturation of the source frame.

**3.** The method according to any of previous claims, wherein the step of decreasing amount of information comprises lowering the resolution of the image.

**4.** The method according to any of previous claims, wherein the step of decreasing amount of information comprises blurring the image.

**5.** The method according to any of previous claims, wherein the step of decreasing amount of information comprises decreasing the color depth of the image.

**6.** The method according to any of previous claims, wherein the step of decreasing amount of information comprises replacing the pixels with a predetermined pixel.

**7.** The method according to claim 1, wherein the steps of comparing the source video frame with at least one past frame and decreasing amount of information involve calculating (202) an average (C0) of a plurality of source frames and subtracting the average (C0) from a source frame (C) to obtain a modified frame.

**8.** The method according to claim 7, further comprising dividing the values of pixels of the modified frame by 2 and adding a half of the value of the color range to the result.

**9.** A computer program comprising program code means for performing all the steps of the method according to any of claims 1-8 when said program is run on a computer.

**10.** A computer readable medium storing computer-executable instructions performing all the steps of the method according to any of claims 1-8 when executed on a computer.

**10.** A system for modifying a video image, comprising:
- a video image source (101, 301), the source video image comprising source frames;
- means for comparing the source video frame with at least one past frame to indicate at least one area with a moving object;
- means for decreasing amount of information in an area of the source video frame outside the area with the moving object to generate a modified frame.

**11.** The system according to claim 10, comprising
- a moving object mask generator (120) configured to generate a moving object mask comprising the contents of the frame that correspond to the objects which changed their position,
- an image content reduction block (130) configured to decrease amount of information in a source video frame,
- an image multiplexer (140) configured to combine the degraded image output from the image content reduction block (130) with the moving object mask output from the moving object mask generator (120).

**12.** The system according to claim 10, comprising:
- a series of at least three buffers (321) arranged as a shift register (320) and configured to store consecutive recent frames of the source video signal;
- an average value calculator (330) configured to calculate an average value (C0) of pixels of frames stored in the buffers (321)
- a deviation calculator (340) configured to generate a modified image as a function of values of pixels of an image stored in one of the buffers (321) and the average values (C0) calculated by the average value calculator (330).
